# EUROPÄISCHE PATENTSCHRIFT

(11) **EP 4 442 357 B1**
(45) Veröffentlichungstag und Bekanntmachung des Hinweises auf die Patenterteilung: **27.08.2025**
(21) Anmeldenummer: 24159623.8
(22) Anmeldetag: 26.02.2024
(51) Int. Cl.: B01F 27/702, B01F 35/222, A22C 5/00, B01F 27/072

(54) **VERFAHREN ZUM STEUERN EINER MISCHVORRICHTUNG**
METHOD FOR CONTROLLING A MIXING DEVICE
PROCÉDÉ DE COMMANDE D'UN DISPOSITIF DE MÉLANGE

(30) Priorität: 06.04.2023 AT 502472023
(43) Veröffentlichungstag der Anmeldung: 09.10.2024
(73) Patentinhaber: Maschinenfabrik Laska Gesellschaft m.b.H., 4050 Traun (AT)
(72) Erfinder: Gögele, Thomas, 4060 Leonding (AT)
(74) Vertreter: Hübscher & Partner Patentanwälte GmbH

(56) Entgegenhaltungen:
- EP-A1- 3 900 816
- WO-A1-88/04198
- US-A1- 2008 094 939

## Beschreibung

Die Erfindung bezieht sich auf ein Verfahren zum Steuern einer Mischvorrichtung mit zwei parallelen, durch gesonderte Antriebe gleich- oder gegensinnig antreibbaren Rührwellen, mit übereinstimmend auf den beiden Rührwellen mit axialem Abstand voneinander angeordneten, paarweise im Bereich einander schneidender Umlaufbahnen zusammenwirkenden, gegeneinander in axialer Folge winkelversetzten Rührwerkzeugen und mit einer Steuereinrichtung zur Drehverstellung der beiden Rührwellen aus einer Istdrehlage in eine Solldrehlage für den gleich- oder gegensinnigen Antrieb.

Um Rohstoffe wie Mehl oder Fleisch vorteilhaft mischen und rühren zu können, ist es bei Doppelwellenmischern bekannt (EP 3 900 816 A1), die beiden parallelen Rührwellen, die übereinstimmend mit axial und über den Umfang verteilt angeordneten Rührwerkzeugen versehen sind, je für sich über gesonderte Antriebe entweder gleichsinnig oder gegensinnig anzutreiben. Da bei einer für die Misch- und Rührwirkung vorteilhaften Überschneidung der Umlaufbahnen der paarweise zusammenwirkenden Rührwerkzeuge zwischen den beiden Rührwellen unterschiedliche Phasenwinkel für einen gleich- oder gegensinnigen Antrieb eingehalten werden müssen, um eine Kollision der Rührwerkzeuge zu unterbinden, müssen zum Umschalten zwischen einem gleich- und einem gegensinnigen Antrieb die beiden Rührwellen zur Einstellung des jeweils erforderlichen Phasenwinkels gegeneinander verdreht werden. Während für einen Gleichlauf ein Phasenwinkel in einem Toleranzbereich um 0° erforderlich ist, muss für einen gegensinnigen Drehantrieb der beiden Rührwellen ein Phasenwinkel im Toleranzbereich um 90° oder 180° eingestellt werden. Es bleibt jedoch offen, durch welche Steuerungsmaßnahmen diese Umstellung erreicht werden soll.

EP3900816 A1 offenbart den Oberbegriff des Anspruchs 1.

Der Erfindung liegt somit die Aufgabe zugrunde, ein Verfahren anzugeben, mit dessen Hilfe eine Mischvorrichtung mit zwei parallelen, durch gesonderte Antriebe gleich- oder gegensinnig antreibbaren Rührwellen so gesteuert werden kann, dass eine vergleichsweise einfache, automatische Einstellung des für die jeweilige Antriebsart erforderlichen Phasenwinkels zwischen den beiden Rührwellen ermöglicht wird.

Ausgehend von einem Verfahren der eingangs geschilderten Art löst die Erfindung die gestellte Aufgabe mit ein Verfahren gemäß Anspruch 1, und zwar dadurch, dass die Umlaufbahnen in mehrere Winkelsektoren unterteilt werden, dass die zur Überführung zweier ausgewählter, zusammenwirkender Rührwerkzeuge aus je einem Winkelsektor in eine vorgegebene, übereinstimmende Ausgangsdrehlage erforderliche Reihenfolge der Drehung und der Drehrichtung der Rührwellen für alle Kombinationen der Winkelsektoren in einem Steuerprogramm festgelegt werden und dass vor einem gleich- oder gegensinnigen Antrieb der Rührwellen die Istdrehlagen mit den zugehörigen Winkelsektoren der beiden ausgewählten Rührwerkzeuge erfasst werden, die in der für die beiden erfassten Winkelsektoren durch das Steuerprogramm festgelegten Reihenfolge und Drehrichtung in die vorgegebene Ausgangsdrehlage gedreht werden, bevor die beiden Rührwellen aus dieser die Solldrehlage für einen gleichsinnigen Antrieb bildenden Ausgangsdrehlage gleichsinnig oder aus einer gegenüber dieser Ausgangsdrehlage einen Phasenwinkel aufweisenden Solldrehlage gegensinnig angetrieben werden.

Da zufolge dieser Maßnahmen die Winkelsektoren, in die die jeweiligen Istdrehlagen der beiden ausgewählten Rührwerkzeuge fallen, und nicht die Istdrehlagen selbst die Reihenfolge der Drehschritte und Drehrichtung für die beiden Rührwellen vorgeben, kann der Steuerungsaufwand vergleichsweise klein gehalten werden. Dazu kommt, dass unabhängig davon, ob ein gleich- oder gegensinniger Antrieb der beiden Rührwellen angestrebt wird, die beiden Rührwellen durch ihre Antriebe so gedreht werden, dass die beiden ausgewählten Rührwerkzeuge in eine übereinstimmende, vorgegebene Ausgangsdrehlage überführt werden, in der somit die beiden Rührwellen einen Phasenwinkel von 0° aufweisen. Diese Ausgangsdrehlage entspricht der Solldrehlage der beiden Rührwellen für einen gleichsinnigen Antrieb, sodass für einen gleichsinnigen Antrieb keine weiteren Einstellungen erforderlich werden. Für einen gegensinnigen Antrieb der beiden Rührwellen ist allerdings eine zusätzliche gegenseitige Verdrehung der beiden Rührwellen um einen entsprechenden Phasenwinkel von beispielsweise 90° vorzunehmen, um die für einen gegensinnigen Drehantrieb erforderliche Solldrehlage der beiden Rührwellen einzustellen.

Die Rührwerkzeuge sind auf ihren Rührwellen nicht nur in einem gegenseitigen axialen Abstand, sondern auch in axialer Folge gegeneinander winkelversetzt angeordnet. Da für eine kollisionsfreie Drehung der Rührwellen insbesondere die paarweise zusammenwirkenden Rührwerkzeuge zu berücksichtigen sind, die sich im Überschneidungsbereich ihrer Umlaufbahnen befinden, und die beiden ausgewählten Rührwerkzeuge, die die Drehlage der zugehörigen Rührwellen bestimmen bzw. durch die einfach erfassbare Drehlage der beiden Rührwellen in ihrer Drehlage bestimmt sind, häufig außerhalb des Überschneidungsbereichs ihrer Umlaufbahnen liegen, werden die Rührwellen entsprechend dem Steuerprogramm vorteilhaft zunächst so gedreht, dass die im Überschneidungsbereich ihrer Umlaufbahnen befindlichen Rührwerkzeuge die den beiden ausgewählten Rührwerkzeugen zugehörige Ausgangsdrehlage einnehmen, bevor die beiden ausgewählten Rührwerkzeuge aus der durch die Drehung der Rührwerkzeuge aus dem Überschneidungsbereich bedingten Zwischenstellung in diese Ausgangsdrehlage gedreht werden.

Ergibt die Erfassung der Drehlagen der beiden ausgewählten Rührwerkzeuge, dass sich der daraus ableitbare Phasenwinkel zwischen den beiden Rührwellen nur geringfügig von dem durch die Solldrehlagen bestimmten Phasenwinkel unterscheidet, bedeutet dies, dass beim gegenseitigen Verdrehen der beiden Rührwellen um den Differenzwinkel zwischen dem gemessenen Istwinkel und dem vorgegebenen Sollwinkel der Phase im Sinne einer Nachführung des Istwinkels an den Sollwinkel keine Gefahr einer Kollision zwischen den zusammenwirkenden Rührwerkzeugen besteht, sodass nach einer gegenseitigen Verdrehung der beiden Rührwellen um den erfassten Differenzwinkel die beiden ausgewählten Rührwerkzeuge unter Beachtung des für den Soll-Phasenwinkel vorgegebenen Drehsinn in die für diese ausgewählten Rührwerkzeuge vorgegebene Ausgangsdrehlage gedreht werden können. Der hierfür maßgebliche, maximale Differenzwinkel ist vor allem von der Größe des Winkels abhängig über den sich die Rührwerkzeuge in einem Überdeckungsbereich erstrecken.

Um unter Berücksichtigung der Toleranzverhältnisse hinsichtlich der Zuteilung der Istlagen der Rührwerkzeuge zu einzelnen Winkelsektoren ausreichend klare Verhältnisse schaffen zu können, empfiehlt es sich, die Anzahl der Winkelsektoren größer als die Anzahl der sich aus einer axialen Projektion einer Rührwelle ergebenden Rührwerkzeuge zu wählen.

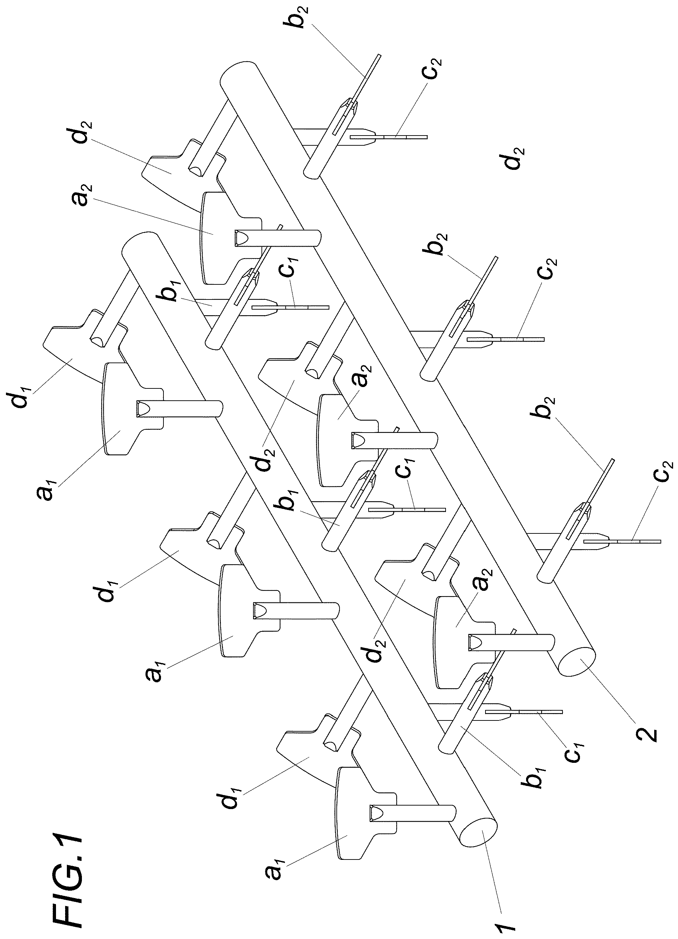

Anhand der Zeichnung wird das erfindungsgemäße Verfahren zum Steuern einer Mischvorrichtung näher erläutert. Es zeigen
- Fig. 1: zwei parallele, je für sich antreibbare Rührwellen mit übereinstimmend verteilt angeordneten, paarweise im Bereich einander schneidender Umlaufbahnen zusammenwirkenden Rührwerkzeugen einer Mischvorrichtung in einer axonometrischen Darstellung,
- Fig. 2: diese Rührwellen in übereinstimmender Drehlage in einer schematischen, stirnseitigen Ansicht und die
- Fig. 3: und 4 eine stirnseitige Ansicht der beiden Rührwellen in unterschiedlichen gegenseitigen Drehstellungen.

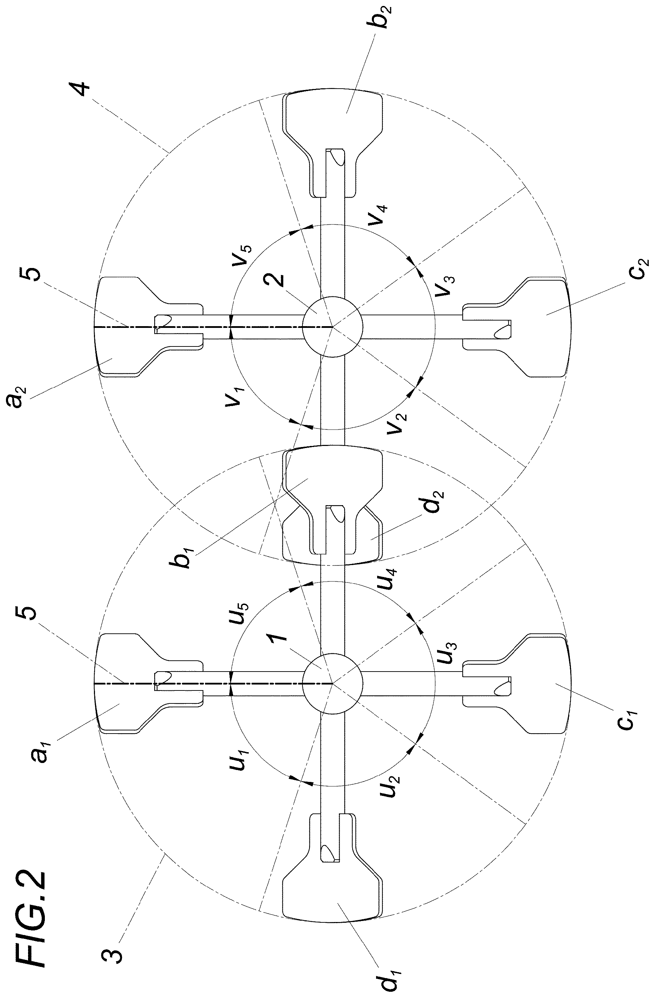

Eine mithilfe des erfindungsgemäßen Verfahrens zu steuernde Mischvorrichtung weist zwei in einem Mischbehälter gelagerte, parallel nebeneinanderliegende, je für sich durch einen Motor in beiden Drehrichtungen antreibbare Rührwellen 1, 2 auf, die mit axialem Abstand voneinander angeordneten, paarweise im Bereich einander überschneidender Umlaufbahnen 3, 4 zusammenwirkenden, radial abstehenden Rührwerkzeugen a₁, a₂, b₁, b₂, c₁, c₂ und d₁, d₂ versehen sind. Diese in axialer Folge gegeneinander beispielsweise um 90° winkelversetzten Rührwerkzeuge a-d bilden mehrere axial aufeinanderfolgende Werkzeuggruppen aus je über 360° verteilten Rührwerkzeugen, also gemäß dem dargestellten Ausführungsbeispiel aus vier Werkzeugpaaren a-d, wie dies insbesondere der Fig. 2 entnommen werden kann.

Um eine einfache kollisionsfreie Drehung der Rührwellen 1, 2 in eine vorgegebene Ausgangsdrehlage zu ermöglichen, ist zunächst eine für die beiden Rührwellen 1, 2 übereinstimmende Drehlage als Ausgangsdrehlage zu bestimmen, wie sie beispielsweise in der Fig. 2 dargestellt ist und durch die übereinstimmende Drehlage eines ausgewählten Paars von zusammenwirkenden Rührwerkzeugen erfasst wird. Gemäß dem Ausführungsbeispiel wird diese Ausgangsdrehlage 5 durch die beiden Rührwerkzeuge a₁ und a₂ in ihrer übereinstimmenden, gegenüber der gemeinsamen Axialebene der beiden Rührwellen 1, 2 senkrechten Ausrichtung bestimmt, die durch den beiden Rührwellen 1, 2 zugeordnete Drehlagengeber genau vorgegeben werden kann. Obwohl die gewählte Ausgangsdrehlage 5 vergleichsweise einfach überschaubare Zusammenhänge mit sich bringt, ist sie keinesfalls zwingend.

Die steuerungstechnische Aufgabe besteht nun darin, die beiden Rührwellen 1, 2 aus einer beliebigen Istdrehlage kollisionsfrei in die vorgegebene Ausgangsdrehlage 5 zu drehen, die die gegenseitige Solldrehlage mit einem Phasenwinkel von 0° zwischen den beiden Rührwellen 1, 2 für einen gleichsinnigen Antrieb der beiden Rührwellen 1, 2 darstellt. Für einen gegensinnigen Antrieb sind die beiden Rührwellen 1, 2 noch um einen Phasenwinkel von 90° oder allenfalls 180° gegeneinander zu verdrehen, bevor mit dem kollisionsfreien gegensinnigen Antrieb der beiden Rührwellen 1, 2 begonnen werden kann.

Zur Lösung dieser Aufgabe werden die Umlaufbahnen 3, 4 der Rührwerkzeuge a-d in Winkelsektoren u und v unterteilt, wobei die Anzahl der Winkelsektoren u bzw. v größer als die Anzahl der in einer Werkzeuggruppe zusammengefassten Rührwerkzeuge a-d einer Rührwelle 1, 2 sein soll. Gemäß dem Ausführungsbeispiel umfasst eine Werkzeuggruppe vier Rührwerkzeuge a-d, während die Umlaufbahnen 3, 4 in fünf Winkelsektoren u₁-u₅ bzw. v₁-v₅ unterteilt sind. Zur Vorgabe der für eine kollisionsfreie Überführung der beiden Rührwellen 1, 2 aus einer beliebigen Istdrehlage in die vorgegebene Ausgangsdrehlage 5 erforderliche Reihenfolge und Richtung der Drehschritte der beiden Rührwellen 1, 2 ist entscheidend, in welche der Winkelsektoren u₁-u₅ und v₁-v₅ die Istdrehlage der hierfür ausgewählten Rührwerkzeuge a₁ und a₂ fallen, weil mit diesen Vorgaben die Reihenfolge der Drehschritte und deren Richtung für die beiden Rührwellen 1, 2 bestimmt und in einem Steuerprogramm abgespeichert werden können, um die Steuereinrichtung zur Drehverstellung der beiden Rührwellen 1, 2 entsprechend dem Steuerprogramm ansteuern zu können.

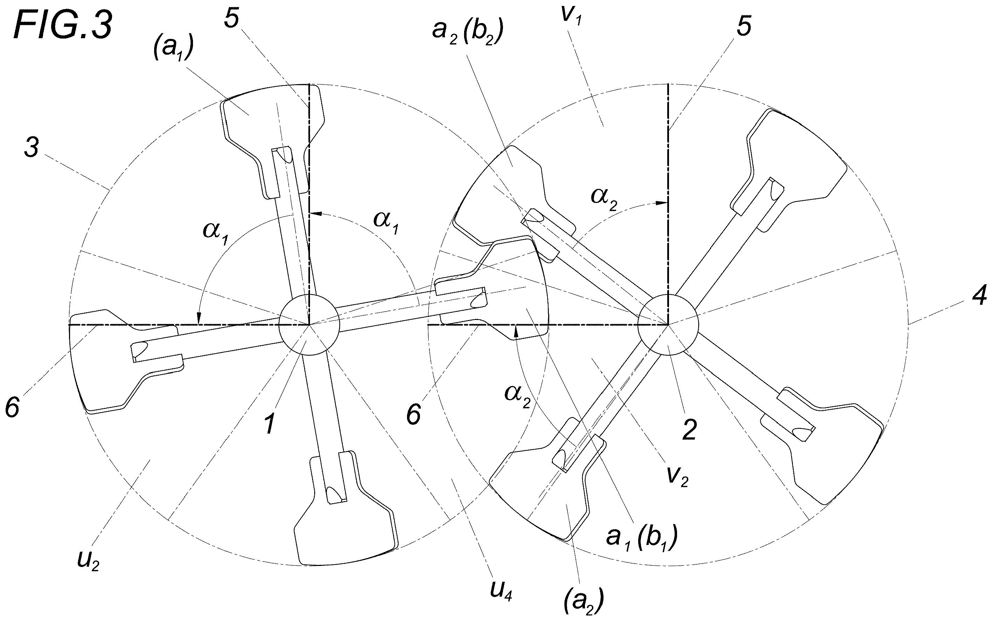

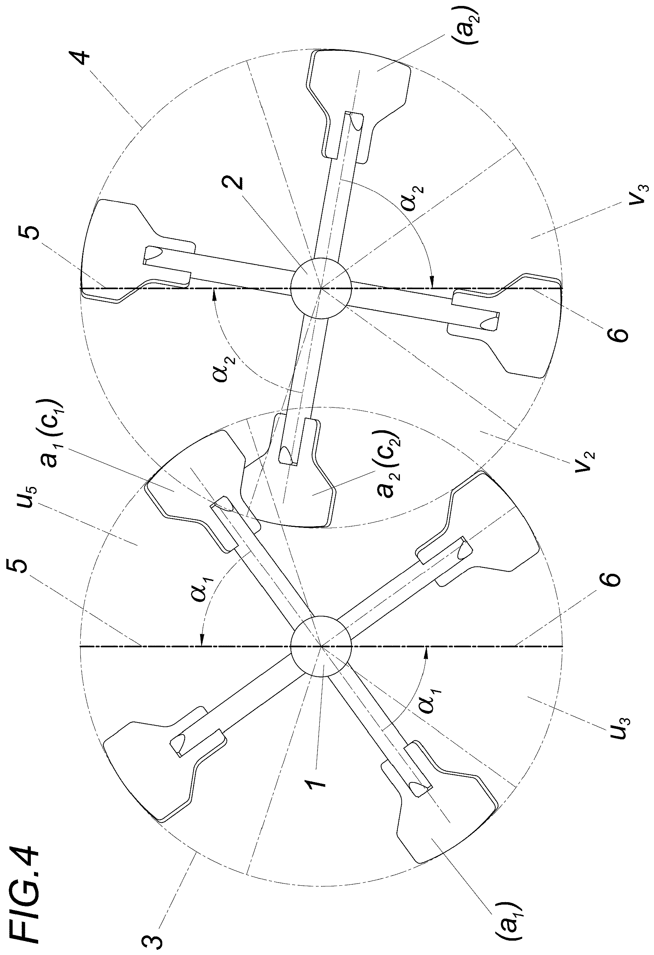

Anhand der Fig. 3 und 4 wird dieses Steuerungsverfahren näher erklärt. Liegen gemäß der Fig. 3 die durch das ausgewählte Rührwerkzeug a₁ bestimmte Istdrehlage der Rührwelle 1 im Bereich des Winkelsektors u₄ und die durch das Rührwerkzeug a₂ bestimmte Istdrehlage der Rührwelle 2 im Bereich des Winkelsektors v₁, so ist wegen des gegenüber dem Winkel α₁ zwischen dem Rührwerkzeug a₁ und der Ausgangsdrehlage 5 kleineren Winkels α₂ zwischen dem Rührwerkzeug a₂ und der Ausgangsdrehlage 5 zunächst das Rührwerkzeug a₂ um den Winkel α₂ im Uhrzeigersinn in die Ausgangsdrehlage 5 zu drehen, bevor das Rührwerkzeug a₁ um den Winkel α₁ entgegen dem Uhrzeigersinn in die Ausgangsdrehlage 5 gebracht werden kann. Die Winkel α₁ und α₂ sind durch die erfassten Istdrehlagen der beiden Rührwellen 1, 2 aufgrund der geometrischen Zuordnungen der Rührwerkzeuge a-d und der vorgegebenen Ausgangsdrehlage 5 eindeutig bestimmt.

Da gemäß der Fig. 4 aufgrund der Istdrehlage des Rührwerkzeuge a₁ im Winkelsektor u₅ und der Istdrehlage des Rührwerkzeugs a₂ im Winkelsektor v₂ der Winkel α₂ zwischen dem Rührwerkzeug a₂ und der Ausgangsdrehlage 5 größer als der entsprechende Winkel α₁ des Rührwerks a₁ ist, muss aus diesen Istdrehlagen der Rührwellen 1, 2 zunächst die Rührwelle 1 um den Winkel α₁ entgegen dem Uhrzeigersinn gedreht werden, bevor die Rührwelle 2 im Uhrzeigersinn um den Winkelschritt α₂ in die Ausgangsdrehlage 5 gedreht werden kann.

Kollisionsstellungen im Überschneidungsbereich der Umlaufbahnen 3, 4 sind naturgemäß nicht nur bei den ausgewählten Rührwerkzeugen a, sondern auch bei allen anderen Werkzeugpaaren möglich und müssen durch das Steuerprogramm berücksichtigt werden. Für den Beispielsfall, dass sich die zusammenwirkenden Rührwerkzeuge b₁ und b₂ in der in der Fig. 3 für die Rührwerkzeuge a₁ und a₂ gezeichneten Istdrehlage befinden, was durch die in Runde Klammern gesetzten Bezugszeichen (b₁) und (b₂) angedeutet ist, ergibt sich für die ausgewählten Rührwerkzeuge (a₁) und (a₂) eine Istdrehlage in den Winkelsektoren u₁ und v₂.

Damit die Rührwerkzeuge (a₁), (a₂) durch eine kollisionsfreie Drehung der Rührwellen 1, 2 in die vorgegebene Ausgangsdrehlage 5 gedreht werden können, müssen demnach zunächst die Rührwerkzeuge (b₁), (b₂) in der vorher für die Rührwerkzeuge a₁ und a₂ beschriebenen Drehschrittfolge und Richtung um die Winkel α₁ und α₂ in die Ausgangsdrehlage 5 gedreht werden, wobei die Rührwerkzeuge (a₁) und (a₂) die gegenüber der erfassten Istdrehlage um die Winkel α₁ und α₂ versetzten, strichpunktiert angedeuteten, übereinstimmenden Zwischenlagen 6 einnehmen, aus denen sie dann ohne Kollisionsgefahr auch für die übrigen zusammenwirkenden Rührwerkzeuge a-d gleichsinnig in die Ausgangsdrehlage 5 gedreht werden können, und zwar gemäß dem Ausführungsbeispiel vorzugsweise im Uhrzeigersinn.

In analoger Weise ergibt sich auch für eine Istdrehlage der ausgewählten Rührwerkzeuge (a₁), (a₂) gemäß der Fig. 4, in der sich beispielsweise die Rührwerkzeuge (c₁) und (c₂) im Überschneidungsbereich ihrer Umlaufbahnen 3, 4 befinden, eine im Steuerprogramm abgelegte Vorgabe der Drehschrittfolgen und Drehrichtungen für eine kollisionsfreie Drehung der Rührwellen 1, 2 in die für die Rührwerkzeuge (a₁), (a₂) vorgegebene Ausgangsdrehlage 5. Hierfür sind wiederum zunächst die sich im Überschneidungsbereich ihrer Umlaufbahnen 3, 4 befindlichen Rührwerkzeuge (c₁), (c₂) in die Ausgangsdrehlage 5 zu drehen, wobei zuerst das Rührwerkzeug (c₁) entgegen dem Uhrzeigersinn um den Winkel α₁ und dann das Rührwerkzeug (c₂) im Uhrzeigersinn um den Winkel α₂ gedreht werden, bevor die nunmehr in der gegenüber der Ausgangsdrehlage 5 um 180° versetzten Zwischenlage 6 befindlichen Rührwerkzeuge (a₁) und (a₂) gleichsinnig in die Ausgangsdrehlage 5 gedreht werden, die für einen gleichsinnigen Drehantrieb der beiden Rührwellen 1, 2 bereits deren Solldrehlage bildet. Für einen gegensinnigen Drehantrieb der Rührwellen 1, 2 ist ausgehend von dieser übereinstimmenden Ausgangsdrehlage 5 eine der beiden Rührwellen 1, 2 gegenüber der anderen um 90° bzw. um 180° zu drehen, um aus diesen einen entsprechenden Phasenwinkel sicherstellenden Solldrehlagen den gegensinnigen Antrieb der beiden Rührwellen 1, 2 zu starten.

## Patentansprüche

1. Verfahren zum Steuern einer Mischvorrichtung mit zwei parallelen, durch gesonderte Antriebe gleich- oder gegensinnig antreibbaren Rührwellen (1, 2), mit übereinstimmend auf den beiden Rührwellen (1, 2) mit axialem Abstand voneinander angeordneten, paarweise im Bereich einander schneidender Umlaufbahnen (3, 4) zusammenwirkenden, gegeneinander in axialer Folge winkelversetzten Rührwerkzeugen (a-d) und mit einer Steuereinrichtung zur Drehverstellung der beiden Rührwellen (1, 2) aus einer Istdrehlage in eine Solldrehlage für den gleich- oder gegensinnigen Antrieb, **dadurch gekennzeichnet, dass** die Umlaufbahnen (3, 4) in mehrere Winkelsektoren (u, v) unterteilt werden, dass die zur Überführung zweier ausgewählter, zusammenwirkender Rührwerkzeuge (a₁, a₂) aus je einem Winkelsektor (u, v) in eine vorgegebene, übereinstimmende Ausgangsdrehlage (5) erforderliche Reihenfolge der Drehung und der Drehrichtung der Rührwellen (1, 2) für alle Kombinationen der Winkelsektoren (u, v) in einem Steuerprogramm festgelegt werden und dass vor einem gleich- oder gegensinnigen Antrieb der Rührwellen (1, 2) die Istdrehlagen mit den zugehörigen Winkelsektoren (u, v) der beiden ausgewählten Rührwerkzeuge (a₁, a₂) erfasst werden, die dann in der für die beiden erfassten Winkelsektoren (u, v) durch das Steuerprogramm festgelegten Reihenfolge und Drehrichtung in die vorgegebene Ausgangsdrehlage (5) gedreht werden, bevor die beiden Rührwellen (1, 2) aus dieser die Solldrehlage für einen gleichsinnigen Antrieb bildenden Ausgangsdrehlage (5) gleichsinnig oder aus einer gegenüber dieser Ausgangsdrehlage (5) einen Phasenwinkel aufweisenden Solldrehlage gegensinnig angetrieben werden.

2. Verfahren nach Anspruch 1, **dadurch gekennzeichnet, dass** bis zu einem vorgegebenen maximalen Differenzwinkel zwischen dem Sollwinkel und dem Istwinkel der Phase zwischen den beiden Rührwellen (1, 2) eine der beiden Rührwellen (1, 2) im Sinne einer Nachführung des Istwinkels an den Sollwinkel um den Differenzwinkel gedreht wird, bevor die Rührwellen (1, 2) in die Ausgangsdrehlage (5) gedreht werden.

3. Verfahren nach Anspruch 1 oder 2, **dadurch gekennzeichnet, dass** die Anzahl der Winkelsektoren (u, v) größer als die Anzahl der sich aus einer axialen Projektion einer Rührwelle (1, 2) ergebenden Rührwerkzeuge (a-d) ist.

## Claims

1. Method for controlling a mixing device with two parallel stirring shafts (1, 2) that can be driven in the same or opposite directions by separate drives, with stirring tools (a-d) arranged on the two stirring shafts (1, 2) at an axial distance from each other, cooperating with each other in pairs in the area of intersecting circular paths (3, 4) and offset against each other in axial sequence and with a control device for adjusting the rotation of the two stirring shafts (1, 2) from an actual rotational position to a desired rotational position for driving in the same or opposite directions, **characterised in that** the circular paths (3, 4) are divided into several angular sectors (u, v), **in that** the sequence and direction of rotation of the stirring shafts (1, 2) required for transferring two selected, interacting stirring tools (a₁ , a₂) from each of an angular sector (u, v) into a predetermined, matching initial rotational position (5) for all combinations of the angular sectors (u, v) are defined in a control program, and that, before the stirring shafts (1, 2) are driven in the same or opposite directions, the actual rotational positions with the associated angular sectors (u, v) of the two selected stirring tools (a₁, a₂) are detected, which are then rotated to the specified initial rotational position (5) in the sequence and direction of rotation specified by the control program for the two detected angular sectors (u, v) before the two stirring shafts (1, 2) are driven in the same direction from this initial rotational position (5), which forms the desired rotational position for a drive in the same direction, or in opposite directions from a desired rotational position having a phase angle relative to this initial rotational position (5).

2. Method according to claim 1, **characterised in that**, up to a predetermined maximum difference angle between the desired angle and the actual angle of the phase between the two stirring shafts (1, 2), one of the two stirring shafts (1, 2) is rotated by the difference angle in the sense of tracking the actual angle to the desired angle before the stirring shafts (1, 2) are rotated to the initial rotational position (5).

3. Method according to claim 1 or 2, **characterised in that** the number of angular sectors (u, v) is greater than the number of stirring tools (a-d) resulting from an axial projection of a stirring shaft (1, 2).

## Revendications

1. Procédé pour commander un dispositif mélangeur comportant deux arbres d'agitation parallèles (1, 2) pouvant être entraînés dans le même sens ou dans des sens opposés par des entraînements séparés, avec des outils d'agitation (a-d) disposés de manière à coïncider sur les deux arbres d'agitation (1, 2) axialement distants l'un de l'autre, coopérant par paires dans la zone de trajectoires circulaires se croisant (3, 4), décalés angulairement les uns par rapport aux autres dans le sens axial, et avec un dispositif de commande pour faire passer les deux arbres d'agitation (1, 2) d'une position de rotation réelle à une position de rotation théorique pour l'entraînement dans le même sens ou dans le sens opposé, **caractérisé en ce que** les trajectoires circulaires (3, 4) sont divisées en plusieurs secteurs angulaires (u, v),
que la séquence de rotation et le sens de rotation requis pour le transfert de deux outils d'agitation sélectionnés et coopérants (a1, a2) constitués chacun d'un secteur angulaire (u, v) dans une position de rotation initiale prédéfinie et identique (5) sont définis pour toutes les combinaisons des secteurs angulaires (u, v) par un programme de commande
et que, avant un entraînement dans le même sens ou en sens inverse des arbres d'agitation (1, 2), les positions de rotation réelles sont détectées à l'aide des secteurs angulaires (u, v) des deux outils d'agitation sélectionnés (a1, a2) dans un programme de commande, qui sont ensuite tournés dans l'ordre et le sens de rotation définis par le programme de commande pour les deux secteurs angulaires définis (u, v) dans la position de rotation initiale prédéfinie (5) avant que les deux arbres d'agitation (1, 2) soient entraînés à partir de la position de rotation initiale (5) formant la position de rotation de consigne pour un entraînement dans le même sens ou dans le sens opposé à partir d'une position de rotation de consigne présentant un angle de phase par rapport à cette position de rotation de sortie (5).

2. Procédé selon la revendication 1, **caractérisé en ce que** jusqu'à un angle différentiel maximal prédéfini entre l'angle de consigne et l'angle réel de la phase entre les deux arbres d'agitation (1, 2), l'un des deux arbres d'agitation (1, 2) est tourné dans le sens d'un suivi de l'angle réel par rapport à l'angle de consigne de la valeur de l'angle différentiel avant que les arbres d'agitation (1, 2) soient tournés dans la position de rotation initiale (5).

3. Procédé selon la revendication 1 ou 2, **caractérisé en ce que** le nombre de secteurs angulaires (u, v) est supérieur au nombre d'outils d'agitation (a-d) résultant d'une projection axiale d'un arbre d'agitation (1, 2).
